# EUROPEAN PATENT SPECIFICATION

(11) **EP 4 626 761 B1**
(45) Date of publication and mention of the grant of the patent: **28.10.2026**
(21) Application number: 22823527.1
(22) Date of filing: 01.12.2022
(51) Int. Cl.: B60W 30/02, B60W 30/14, B60W 30/188, B60W 50/00, B60W 50/023, B60W 50/038, B60W 50/04, B60W 50/14

(54) **COMPUTER SYSTEM AND COMPUTER-IMPLEMENTED METHOD FOR CONTROLLING A VEHICLE**
COMPUTERSYSTEM UND COMPUTERIMPLEMENTIERTES VERFAHREN ZUR STEUERUNG EINES FAHRZEUGS
SYSTÈME INFORMATIQUE ET PROCÉDÉ MIS EN OEUVRE PAR ORDINATEUR POUR LA COMMANDE D'UN VÉHICULE

(43) Date of publication of application: 08.10.2025
(73) Proprietor: VOLVO TRUCK CORPORATION, 405 08 Göteborg (SE)
(72) Inventor: GELSO, Esteban, 421 51 VÄSTRA FRÖLUNDA (SE); GROTH, Björn, 417 28 GÖTEBORG (SE); SADEGHI KATI, Maliheh, 433 46 PARTILLE (SE); THAI, Vi Cuong, 422 49 HISINGS BACKA (SE)
(74) Representative: Ström & Gulliksson AB
(86) International application number: PCT/EP2022/083976
(87) International publication number: WO 2024/114909

(56) References cited:
- WO-A1-2022/184258
- DE-A1- 102008 026 509
- DE-A1- 102021 205 087
- US-A1- 2021 065 481
- US-A1- 2022 324 466

## Description

### TECHNICAL FIELD

The invention relates generally to vehicle motion management. In particular aspects, the disclosure relates to vehicle control safety. The invention can be applied in heavy-duty vehicles, such as trucks, buses, and construction equipment. Although the invention may be described with respect to a particular vehicle, the invention is not restricted to any particular vehicle.

### BACKGROUND

For motion control, a vehicle typically comprises a plurality of motion support devices (MDSs) for actuating the vehicle. Example motion support devices (e.g., in relation to a controllable wheel of the vehicle) include an orientation device, a propulsion device, and a braking device.

Motion requests (e.g., representing a desired acceleration and/or a desired curvature) may be used for determining actuator requests. The actuator requests are used to control the operation of the motion support devices.

In some examples, a plurality of global forces elements are derived based on the motion requests, and control allocation is applied for transforming the global forces elements to the actuator requests.

A problem in this respect is that application of the actuator requests may not always result in the desired vehicle motion, and the resulting vehicle motion may even be un-safe.

Therefore, there is a need for improved safety in relation to vehicle motion management.

US2022/0324466A1 describes a device for controlling movement of a motor vehicle, wherein future states of the vehicle are determined, and a future risk situation is deduced. DE102021205087A1 describes a predication device for a brake system component, wherein it is estimated whether the occurrence of at least one functional impairment of at least one brake system component of the brake system is probable during a specified prediction time interval. WO2022/184258A1 describes control-envelope based vehicle motion management.

### SUMMARY

Various aspects may aim to solve or mitigate, alleviate, or eliminate at least some of the above or other disadvantages.

According to a first aspect of the invention, there is provided a computer system comprising a processor device configured to control a vehicle. The vehicle comprises a plurality of motion support devices for actuating the vehicle and a primary control allocator for transforming motion requests to actuator instructions, and the vehicle is configured to adhere to the motion requests by operating the plurality of motion support devices in response to the instructions from the primary control allocator. The processor device is further configured to analyze a prospect actuator scenario by letting a supplementary control allocator transform a predicted motion request to predicted actuator instructions, and determining whether operating the plurality of motion support devices in response to the predicted actuator instructions and under the prospect actuator scenario fulfils a safety constraint. The processor device is also configured to perform a mitigation action responsive to determination of non-fulfillment of the safety constraint.

The first aspect of the invention may seek to provide improved approaches for vehicle motion management. A technical benefit may include improved safety in relation to the motion control of the vehicle.

According to a second aspect of the invention, there is provided a computer-implemented method for controlling a vehicle, wherein the vehicle comprises a plurality of motion support devices for actuating the vehicle and a primary control allocator for transforming motion requests to actuator instructions, and wherein the vehicle is configured to adhere to the motion requests by operating the plurality of motion support devices in response to the instructions from the primary control allocator. The method comprises analyzing (by a processor device of a computer system) a prospect actuator scenario by letting a supplementary control allocator transform a predicted motion request to predicted actuator instructions, and determining whether operating the plurality of motion support devices in response to the predicted actuator instructions and under the prospect actuator scenario fulfils a safety constraint. The method also comprises performing (by the processor device) a mitigation action responsive to determination of non-fulfillment of the safety constraint.

The second aspect of the invention may seek to provide improved approaches for vehicle motion management. A technical benefit may include improved safety in relation to the motion control of the vehicle.

According to the invention, the prospect actuator scenario comprises one or more of the motion support devices being disabled or impaired. A technical benefit may include that the vehicle may be safely operated when one or more of the motion support devices being disabled or impaired.

In some examples, the prospect actuator scenario is selected based on a likelihood of occurrence. A technical benefit may include that a probability of safe vehicle operation and/or an efficiency of the analysis is increased.

In some examples, the prospect actuator scenario is selected based on one or more of: component age associated with one or more of the motion support devices, current temperature of one or more of the motion support devices, range of manufacture variations for one or more of the motion support devices, and statistical probability of failure for one or more of the motion support devices. A technical benefit may include that a probability of safe vehicle operation and/or an efficiency of the analysis is increased.

In some examples, the supplementary control allocator is functionally identical to the primary control allocator. A technical benefit may include that the analysis accurately mirrors actual vehicle motion management; thereby providing increased safety for the vehicle motion control, while avoiding to un-necessarily limit the vehicle motion.

In some examples, the predicted motion request is based on information of an upcoming situation and/or a predefined safety scenario. A technical benefit may include that the analysis accurately resembles actual upcoming vehicle motion management; thereby providing increased safety for the vehicle motion control, while avoiding to un-necessarily limit the vehicle motion.

In some examples, the information of the upcoming situation is acquired from one or more of: an environment capturing sensor of the vehicle, and a route information system.

In some examples, determining whether operating the plurality of motion support devices in response to the predicted actuator instructions and under the prospect actuator scenario fulfils a safety constraint comprises applying (by the processor device) the predicted actuator instructions to a vehicle motion model to obtain a predicted vehicle motion behavior, wherein the vehicle motion model is set in accordance with the prospect actuator scenario, and comparing (by the processor device) the predicted vehicle motion behavior to the safety constraints.

In some examples, performing the mitigation action comprises one or more of: issuing a warning through a user interface of the vehicle, limiting a speed of the vehicle, issuing actuator instructions corresponding to an evasive maneuver of the vehicle, overriding or modifying actuator instructions of the primary control allocator, and switching to a redundant motion support device for one or more of the plurality of motion support devices. A technical benefit may include that improved safety may be achieved by an adequate mitigation action (e.g., a mitigation action that provides safe vehicle operation, while avoiding to un-necessarily limit the vehicle motion).

According to a third aspect of the invention, there is provided a computer program product comprising program code for performing, when executed by the processor device, the method of the second aspect.

The third aspect of the invention may seek to convey program code for improved safety in relation to the motion control of the vehicle. A technical benefit may include that new vehicles and/or legacy vehicles may be conveniently configured, by software installation/update, to analyze a prospect actuator scenario in relation to a safety constraint and perform a mitigation action responsive to non-fulfillment of the safety constraint.

According to a fourth aspect of the invention, there is provided a non-transitory computer-readable storage medium comprising instructions, which when executed by the processor device, cause the processor device to perform the method of the second aspect.

The fourth aspect of the invention may seek to convey program code for improved safety in relation to the motion control of the vehicle. A technical benefit may include that new vehicles and/or legacy vehicles may be conveniently configured, by software installation/update, to analyze a prospect actuator scenario in relation to a safety constraint and perform a mitigation action responsive to non-fulfillment of the safety constraint.

According to a fifth aspect beyond the scope of the claims, there is provided an apparatus for controlling a vehicle, wherein the vehicle comprises a plurality of motion support devices for actuating the vehicle and a primary control allocator for transforming motion requests to actuator instructions, and wherein the vehicle is configured to adhere to the motion requests by operating the plurality of motion support devices in response to the instructions from the primary control allocator. The apparatus comprises controlling circuitry configured to cause a prospect actuator scenario to be analyzed by causing a supplementary control allocator to transform a predicted motion request to predicted actuator instructions, and determination of whether operating the plurality of motion support devices in response to the predicted actuator instructions and under the prospect actuator scenario fulfils a safety constraint. The controlling circuitry is also configured to cause a mitigation action to be performed responsive to determination of non-fulfillment of the safety constraint.

The fifth aspect of the disclosure may seek to provide a device for improved safety in relation to the motion control of the vehicle. A technical benefit may include that new vehicles and/or legacy vehicles may be conveniently configured, by installation of the apparatus in the vehicle, to analyze a prospect actuator scenario in relation to a safety constraint and perform a mitigation action responsive to non-fulfillment of the safety constraint.

According to a sixth aspect beyond the scope of the claims, there is provided a vehicle control system comprising the apparatus of the fifth aspect and/or one or more control units configured to perform the method of the second aspect.

According to a further aspect of the invention, there is provided a vehicle comprising the computer system of the first aspect.

In some examples, any of the above aspects may additionally have features identical with or corresponding to any of the various features as explained above for any of the other aspects.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.

Further objects, features and advantages will appear from the detailed description, with reference being made to the accompanying drawings.

The drawings are not necessarily to scale, emphasis instead being placed upon illustrating the examples.
**FIG. 1** is a flowchart illustrating method steps according to some examples.
**FIG. 2** is a schematic drawing of a vehicle according to some examples.
**FIG. 3** is a schematic block diagram of a vehicle control system according to some examples.
**FIG. 4** is a schematic block diagram of a vehicle motion control system according to some examples.
**FIG. 5** is a schematic block diagram of vehicle motion management according to some examples.
**FIG. 6** is a schematic block diagram of a vehicle control system according to some examples.
**FIG. 7** is a schematic diagram of a computer system according to some examples.
**FIG. 8** is a schematic drawing of a computer readable medium according to some examples.
**FIG. 9** is a schematic block diagram of a control unit according to some examples.

### DETAILED DESCRIPTION

Aspects set forth below represent the necessary information to enable those skilled in the art to practice the disclosure.

Examples of the present disclosure will be described more fully hereinafter with reference to the accompanying drawings. The solutions disclosed herein can, however, be realized in many different forms and should not be construed as being limited to the examples set forth herein.

Generally, it should be noted that the principles of this disclosure may be applied to situations with a single-unit vehicle as well as situations with a multi-unit combination vehicle.

As already mentioned, a vehicle typically comprises a plurality of motion support devices, which can be used for motion control of the vehicle via actuation. Example motion support devices (e.g., in relation to a controllable wheel of the vehicle) include an orientation device, a propulsion device, and a braking device.

The motion support devices may be operated based on actuator requests; i.e., actuator requests may be used to control the actuation performed by the motion support devices. Typically, an actuator request comprises a collection of actuator request elements, a.k.a. actuator instructions, *u* = (*u*₁*, u*₂*, ..., u_{N}*)*,* and the value of each actuator request element *uₙ* may represent a control indication for one or more of the motion support devices. For example, an actuator request element value may represent steering angle to be applied to a particular wheel, and/or an actuator request element value may represent torque or rpm to be applied to a particular wheel, and/or an actuator request element value may represent a level of braking to be applied to a particular wheel. A motion support device may associated with a single actuator request element, or with two or more actuator request elements.

The actuator requests may be derived based on a plurality of global forces elements *v =* (*v*₁*, v*₂*, ..., v_{M}*)*, M < N* (i.e., over-actuated/under-determined system), where the value of each global forces element *vₘ* may represent a desired global motion control component for the vehicle (or for a unit of a multi-unit vehicle). For example, a global forces element value may represent a desired longitudinal force *Fₓ* to be applied to the vehicle, and/or a global forces element value may represent a desired lateral force *F_{y}* to be applied to the vehicle, and/or a global forces element value may represent a desired yaw moment *M_{z}* to be applied to the vehicle, etc.

The global forces elements may, in turn, be based on motion requests, which may be obtained from a status of one or more operator control interfaces (e.g., accelerator pedal, steering wheel, etc.), and/or from a driving support system such as a control system for autonomous, or semi-autonomous, driving. The derivation of the global forces elements may be performed in any suitable way; e.g., according to an approach of the prior art.

Control allocation may be applied for transforming the global forces elements *v* = (*v*₁*, v*₂, ..., *v_{M}*) to the actuator request elements *u* = (*u*₁*, u₂,* ..., *u_{N});* i.e., trying to find a*u* that satisfies v. The control allocation can, for example, include application of any suitable control allocation problem; e.g., a control allocation problem of the prior art. For example, the control allocation problem may comprise minimizing the overall power loss subject to respective operating limits (capabilities) (*u, u̅)* of the motion support devices; e.g., ${min}_{u} {\sum }_{n = 1}^{N} {P}_{loss} \left({u}_{n}\right)$ subject to *u* ≤ *u* ≤ *u̅* and *Bu = v*, where *Pₗₒₛₛ*(*uₙ*) represents resulting power loss when the actuator request element *uₙ* is applied, and the matrix $B ∈ {ℝ}^{M \times N}$ represents a transfer function associating the plurality of global forces elements with the collection of actuator request elements.

Since the system is over-actuated, one particular problem involves how information from diagnostic monitors of the MSDs (e.g., current capabilities, capability statistics, etc.) may be used to determine - preferably as soon as possible, or within some time limit - whether or not it is safe to continue using the MSDs (and the vehicle) according to the current approach, and what to do when it is determined to be un-safe.

Safe motion operation of a vehicle is generally desirable; preferably without un-necessarily limiting the vehicle motion.

However, when the performance of one or more of the MDSs is impaired, application of the actuator requests may not result in the desired vehicle motion, and the resulting vehicle motion may even be un-safe. For example, if a particular braking device is malfunctioning, an actuator request for that brake to be activated will not be adhered to and the vehicle may not lower its speed as desired. If such a scenario is likely, it could be beneficial to use another speed-lowering MDS (e.g., another braking device and/or engine braking) instead of, or in addition to, the particular braking device.

Alternatively or additionally, variations in the route (e.g., curvatures, turns, obstacles, halting, up-hill, down-hill, etc.) may be associated with changes in the motion request that are cumbersome (or even impossible) to safely accommodate by the actuators given a current state of the vehicle. For example, if the current speed of the vehicle is relatively high, an actuator request to follow a relatively tight curve may lead to un-safe tilting of the vehicle. If an upcoming scenario includes tight curvature, it could be beneficial to lower the vehicle speed in preparation, even if there is no driver input to this end.

In the following, approaches for improved safety in relation to vehicle motion management will be disclosed.

The approaches for improved safety may generally include analysis of a prospect actuator scenario in relation to a safety constraint, and performance of a mitigation action when the safety constraint is not fulfilled.

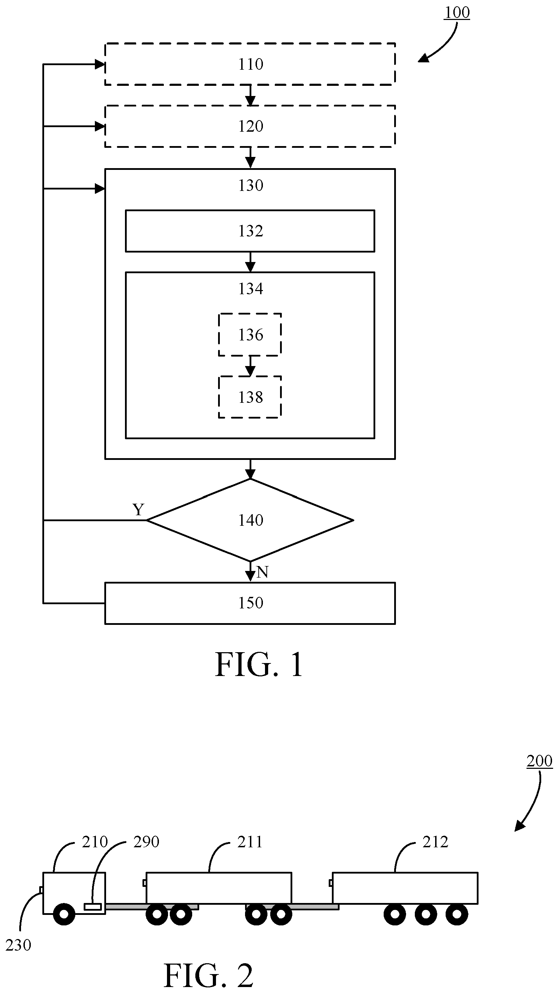

**FIG. 1** illustrates a method 100 according to some examples. The method 100 is a computer-implemented method for controlling a vehicle. For example, one or more steps of the method 100 may be performed, or caused by, a processor device of a computer system. The computer system may be an on-board system, or a remote system, or the system may comprise a combination of on-board system components and remote system components.

The vehicle comprises a plurality of motion support devices for actuating the vehicle. The vehicle also comprises a primary control allocator for transforming motion requests to actuator instructions, and the vehicle is configured to adhere to the motion requests by operating the plurality of motion support devices in response to the instructions from the primary control allocator.

The method 100 may comprise obtaining information defining an upcoming situation, as illustrated by optional step 110. For example, step 110 may comprise acquiring the information of the upcoming situation from an environment capturing sensor (e.g., a forward-facing camera, radar sensor, lidar sensor, or similar) of the vehicle. Alternatively or additionally, step 110 may comprise acquiring the information of the upcoming situation from a route information system (e.g., a navigation system including map information and based on the global positioning system, GPS).

Generally, the information of the upcoming situation may comprise any suitable information (e.g., upcoming curvature, upcoming turn, upcoming obstacle, upcoming up/down-hill conditions, etc.).

As illustrated by optional step 120, the method 100 may comprise determining a (e.g., one or more) predicted motion request. It should be noted that the predicted motion request does not necessarily correspond to an actual upcoming motion request. Rather, the predicted motion request corresponds to a vehicle control situation to be evaluated in relation to safety, and the predicted motion request may be a motion request that is expected with some probability given the vehicle control situation to be evaluated. For example, the vehicle control situation to be evaluated may be based on the upcoming situation and/or on a predefined safety scenario.

Thus, the information of the upcoming situation may be used to determine a predicted motion request. For example, when the upcoming situation includes a curvature, the predicted motion request may correspond to the curvature and may also include speed reduction.

Alternatively or additionally, a predicted motion request may be based on a predefined safety scenario. For example, a predefined safety scenario may comprise that it should be possible to bring the vehicle to halt within some (e.g., a predefined) distance and/or some (e.g., predefined) time.

In some examples, the vehicle control situation to be evaluated may be based on the upcoming situation and on the predefined safety scenario. For example, the vehicle control situation to be evaluated may comprise bringing the vehicle to halt within some distance given an up-coming down-hill situation.

According to some examples, the predicted motion request is determined as the most likely motion request (or a motion request with likelihood above some threshold value) subject to the vehicle control situation to be evaluated. For example, the likelihood may be based on an operator model (e.g., corresponding to request statistics associated with a generalized driver, or with a specific driver). Alternatively or additionally, the likelihood may be based on a model for autonomous (or semi-autonomous) driving.

According to some examples, the predicted motion request is predefined (or otherwise already known), and step 120 may be omitted. Alternatively or additionally, the predicted motion request may be obtained/received from a device external to the device performing the method 100.

In any case, the method 100 comprises analyzing one or more prospect actuator scenario, as illustrated by step 130. The prospect actuator scenario is based on the predicted motion request.

The prospect actuator scenario is based on a virtual vehicle condition to be examined (e.g., MDS malfunction, etc.).

The vehicle condition may be dynamically changing (e.g., capabilities of the motion support devices may vary due to aging, temperature, etc.) and the method 100 may comprise updating the capabilities (e.g., at regular time intervals and/or when conditions change). One example of dynamically changing capabilities includes that a brake device typically heats up during braking and may even lose braking capability completely (brake fading / overheated discs); e.g., due to using service brakes instead of engine braking for speed maintenance during downhill driving. Another example of dynamically changing capabilities includes that the peak torque capability of an electric machine may depend on how much cooling the electric machine has.

In some examples, the prospect actuator scenario comprises one or more of the motion support devices being disabled or impaired (e.g., lower than nominal breaking force due to high/low temperature and/or tire wear).

Alternatively or additionally, the prospect actuator scenario may be selected based on one or more of: component age associated with one or more of the motion support devices, current temperature of one or more of the motion support devices, range of manufacture variations for one or more of the motion support devices, and statistical probability of failure for one or more of the motion support devices.

According to some examples, the prospect actuator scenario may be selected based on a likelihood of occurrence (e.g., by determining the predicted motion request based on likelihood as previously explained, and/or by evaluating malfunction of an MDS which is most likely to fail, e.g., the oldest braking device).

The analysis of step 130 comprises letting a supplementary control allocator transform the predicted motion request to predicted actuator instructions, as illustrated by sub-step 132. Typically, the supplementary control allocator is functionally identical to the primary control allocator.

When the prospect actuator scenario comprises one or more of the motion support devices being disabled or impaired, this information may be considered as known, or unknown, to the supplementary control allocator when sub-step 132 is performed.

The analysis of step 130 also comprises determining whether operating the plurality of motion support devices in response to the predicted actuator instructions and under the prospect actuator scenario fulfils a (e.g., one or more) safety constraint, as illustrated by sub-step 134.

When the prospect actuator scenario comprises one or more of the motion support devices being disabled or impaired, this information may be accounted for when sub-step 134 is performed. For example, sub-step 134 may comprise evaluating how the vehicle behaves if the disabled or impaired motion support device(s) are provided with the predicted actuator instructions.

According to some examples, sub-step 134 may comprise applying the predicted actuator instructions to a vehicle motion model to obtain a predicted vehicle motion behavior, as illustrated by optional sub-sub-step 136, and comparing the predicted vehicle motion behavior to the safety constraints, as illustrated by optional sub-sub-step 138.

The vehicle motion model is generally set in accordance with the considered prospect actuator scenario. For example, when the prospect actuator scenario comprises one or more of the motion support devices being disabled or impaired, the vehicle motion model may comprise the disabled or impaired motion support device(s). Alternatively or additionally, the vehicle motion model may comprise a particular tire wear to be evaluated (e.g., current or prospect tire wear).

The vehicle motion model may, for example, be representable by a control effectiveness matrix (e.g., the static model used in the primary control allocator), or by a vehicle kinematic model (e.g., a yaw-plane single-track model).

Generally, the vehicle motion behavior may be represented using any suitable metric (e.g., position, speed, longitudinal acceleration, lateral acceleration, yaw, forces, moments, etc.).

Also generally, the safety constraint may be any suitable safety constraint.

The safety constraint may be defined via boundaries (envelopes) associated with the vehicle motion behavior. For example, the safety constraint may relate to one or more of the following: that the vehicle should not tilt more than some tiling threshold, that the vehicle should not have a yaw angle larger than some yaw angel threshold, that different units of the vehicle should not have an angle between than that it smaller than some jack-knife angle threshold, that the vehicle should not deviate from an intended path (e.g., a middle of a lane) with more than some path deviation threshold, etc.

Alternatively or additionally, the safety constraint may be defined based on the evaluated vehicle control situation. For example, an upcoming obstacle may be related to different (typically more relaxed) vehicle motion behavior boundaries than an upcoming curvature, since it may be more important to avoid the obstacle than to keep to the intended path, while path keeping may be prioritized for the curvature.

More generally, the safety constraint may be defined via boundaries (envelopes) associated with any suitable metric for vehicle motion behavior (e.g., position, speed, longitudinal acceleration, lateral acceleration, yaw, forces, moments, etc.), wherein each metric may be descriptive of motion behavior of the entire vehicle, of a vehicle unit, of a reference point on the vehicle, or of relative motion behavior among two or more vehicle units or reference points.

If it is determined that the safety constraint is fulfilled (Y-path out of step 140), no further action is taken in relation to the predicted motion request for the evaluated vehicle control situation, and the method 100 may return to step 130 for further evaluation.

The further evaluation may relate to another (e.g., somewhat less likely) predicted motion request for the same vehicle control situation to be evaluated, or may relate to a predicted motion request for another vehicle control situation to be evaluated. Thus, the method 100 may comprise obtaining information defining another upcoming situation (step 110) and/or determining another predicted motion request (step 120) before returning to step 130.

If it is determined that the safety constraint is not fulfilled (N-path out of step 140), the method 100 comprises performing a mitigation action, as illustrated by step 150.

When the mitigation action is performed in relation to the predicted motion request for the evaluated vehicle control situation, the method 100 may return to step 130 for further evaluation, as described above.

The mitigation action may comprise any suitable action. For example, the mitigation action may be an action that aims to cause the actual motion request to deviate from the predicted motion request such that the safety constraint is fulfilled for the evaluated vehicle control situation. Alternatively or additionally, the mitigation action may be an action that aims to cause the actual actuator instructions to deviate from the predicted actuator instructions such that the safety constraint is fulfilled for the evaluated vehicle control situation.

For example, performing the mitigation action may comprise one or more of: issuing a warning through a user interface of the vehicle, limiting a speed of the vehicle (e.g., halting the vehicle), issuing motion request and/or actuator instructions (e.g., for autonomous or semi-autonomous driving) corresponding to an evasive maneuver of the vehicle, overriding or modifying motion request and/or actuator instructions of the primary control allocator, and switching to a redundant motion support device for one or more of the plurality of motion support devices.

In some examples, two or more prospect vehicle control situations are analyzed in parallel (i.e., step 130 is performed in parallel for two or more prospect vehicle control situations). In these examples, performance of the mitigation action may depend on a combination of the analyses. For example, a mitigation action may be performed corresponding to the worst case of non-fulfillment of the safety constraint.

Typically, the method 100 is mainly performed in parallel to the operation of the vehicle based on the actuator instructions from the primary control allocator, while the mitigation action(s) of step 150 may include interfering with (e.g., replacing/overriding) the motion request obtained from operator control interfaces, and/or interfering with (e.g., replacing/overriding) the actuator instructions from the primary control allocator, and/or adjusting the settings of the primary control allocator (e.g., changing capability boundaries of the MSDs for the control allocation problem).

**FIG.** 2 is a schematic drawing of an example vehicle 200 (e.g., for cargo transport), wherein the herein disclosed techniques can be applied. In the illustrated example, the vehicle 200 is a multi-unit combination vehicle that comprises a tractor unit 210 (e.g., truck or towing vehicle) configured to tow one or more trailer unit(s) 211, 212.

The vehicle 200 also comprises an environment capturing sensor 230 for acquisition of upcoming situations (compare with step 110 of **FIG. 1****).**

The tractor unit 210 comprises a vehicle control unit (VCU) 290 - or other computer system comprising a processor device - configured to perform various vehicle control functions, such as vehicle motion management.

The VCU 290 may be configured to perform one or more method steps of the method 100 of **FIG. 1****.** Thus, the analysis and the mitigation action according to the method 100 (compare with steps 130 and 150 of **FIG. 1****)** may be used for controlling the vehicle 200 as already exemplified herein.

Although not shown, it should be understood that a VCU may be comprised - additionally or alternatively - in one or more of the trailer unit(s) 211, 212. Also alternatively or additionally, a control unit (e.g., a parametrized VCU) may be comprised in a remote server node to which the vehicle 200 may be connected via wireless link. Generally, approaches described herein (e.g., the method 100 of **FIG. 1****)** may be performed by any VCU or other control unit; alone or in combination.

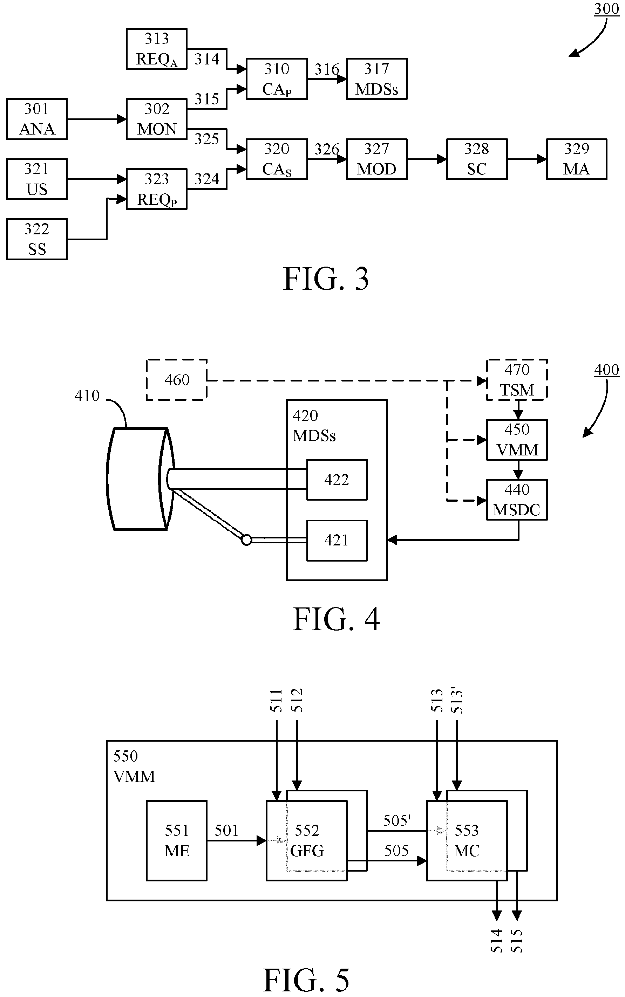

**FIG. 3** schematically illustrates functions of an example vehicle control system 300. For example, one or more functions of the system 300 may be performed by the control unit 290 of **FIG. 2****.** Alternatively or additionally, one or more functions of the system 300 may be seen as implementing (partly or fully) the method 100 of **FIG. 1****.**

The system 300 comprises a primary control allocator (CA_{P}) 310 and a supplementary control allocator (CA_{S}) 320, which may typically be functionally identical.

The primary control allocator 310 is configured to receive input 314 related to actual motion requests (REQ_{A}) 313. For example, the inputs 314 may be in the form of global forces elements derived from the actual motion requests. The primary control allocator 310 may also be configured to receive input 315 regarding MDS availability (e.g., current MDS capabilities). The input 315 may, for example, be provided from the MDSs, or from an MDS monitor (MON) 302. Based on the inputs 314, 315, the primary control allocator is configured to provide actuator instructions 316 for controlling the MDSs 317.

The supplementary control allocator 320 is configured to receive input 325 regarding MDS availability. The input 325 may correspond to the input 315 provided to the primary control allocator, or may be more elaborative. For example, the input 325 may comprise current MDS status (e.g., current MDS capabilities), as well as predictive information regarding the MDSs (e.g., a likelihood of failure, a capability aging profile, a capability variation as depending on temperature, statistical information regarding failure and/or capability - on device level, vehicle level, or higher level, etc.). The input 325 may, for example, be provided from the MDSs, and/or from an MDS monitor (MON) 302. The MDS monitor 302 may be configured to acquire at least some of the predictive information regarding the MDSs from an MDS analyzer (ANA) 301. For example, the MDS analyzer 301 may be configured to collect MDS statistics and/or estimate likelihoods for MDS capabilities.

The supplementary control allocator 320 is also configured to receive input 324 related to predicted motion requests (REQ_{P}) 323. The predicted motion requests 323 correspond to a vehicle control situation to be evaluated in relation to safety. For example, the vehicle control situation to be evaluated may be based on information of an upcoming situation (US) 321 and/or on a predefined safety scenario (SS) 322. According to some examples, block 321 may be compared with step 110 of **FIG. 1****,** and block 323 may be compared with step 120 of **FIG. 1****.**

Based on the inputs 324, 325, the supplementary control allocator 320 is configured to transform the predicted motion request 323 to predicted actuator instructions 326 (compare with sub-step 132 of **FIG. 1****),** which are applied to a vehicle model (MOD) 317 to predict the resulting vehicle motion behavior (compare with sub-sub-step 136 of **FIG. 1****).**

The predicted vehicle motion behavior is compared to the safety constraints (SC) 328 (compare with sub-sub-step 138 of **FIG. 1****),** and a mitigation action (MA) 329 is performed (compare with step 150 of **FIG. 1****)** if/when one or more safety constraints are not fulfilled (compare with step 140 of **FIG. 1****).**

**FIG. 4** schematically illustrates the function of an example vehicle motion control system 400. The vehicle motion control system 400 may, for example, utilize the analysis and mitigation actions as elaborated on previously herein.

The vehicle motion control system 400 controls a wheel 410 of a vehicle, via one or more motion support devices (MSDs) 420; exemplified in **FIG. 4** by a power steering arrangement 421 (an example of an orientation device) and a propulsion device 422 (e.g., an electric machine). The power steering arrangement 421 and the propulsion device 422 are examples of actuators. Generally, the MSDs 420, such as the actuators 421, 422, may be controlled by one or more MSD control unit 440.

According to some examples, a traffic situation management (TSM) function 470, which may be part of a driving support system, plans driving operations with some time horizon; e.g., 1-10 seconds. The time horizon may, for example, correspond to the time it takes for the vehicle to negotiate a curve, make an evasive maneuver, or halt the vehicle. Vehicle maneuvers, as planned and executed by the TSM, can be associated with acceleration profiles and curvature profiles which describe a desired vehicle velocity and turning for a given maneuver.

The TSM function 470 may send motion requests (e.g., continuously or with some periodicity) corresponding to desired acceleration profiles and curvature profiles to a vehicle motion management (VMM) function 450.

Alternatively or additionally, the VMM function 450 may receive motion requests corresponding to desired acceleration profiles and curvature profiles as derived from a status of one or more operator control interfaces (e.g., accelerator pedal, steering wheel, etc.).

In any case, the VMM function 450 performs force allocation to meet the motion requests in a safe and robust manner. The VMM function 450 communicates the force allocation to the relevant MSDs via the MSD control unit (MSDC) 440. The VMM function 450 typically manages both force allocation and MSD coordination; i.e., it may determine what global forces are required where to fulfil the received motion requests. The global forces may comprise any suitable forces, e.g., yaw moments, longitudinal forces, lateral forces, torques, etc.

The MSD control unit 440, the VMM function 450, and the TSM function 470 may have access to sensor data from vehicle sensors 460 (e.g., on-board sensors), which sensor data may be used for the vehicle control. The sensors may comprise any suitable sensors; e.g., one or more of: global positioning system (GPS) receivers, vision-based sensors (such as cameras), wheel speed sensors, radar sensors, lidar sensors, etc.

The sensor data may, for example, be used for determination of a vehicle location in relation to a reference path and/or for determining whether a force allocation is safe. The VMM function 450 may be configured to perform and utilize the analysis and mitigation action as described herein for a vehicle control approached used by the vehicle motion control system 400.

For example, the VMM function 450 and/or the MSD control unit 440 may be comprised in the vehicle control unit 290 of **FIG. 2****.** Alternatively or additionally, the VMM 450 may comprise the primary control allocator 310 and the supplementary control allocator 320 of **FIG. 3****.** Yet alternatively or additionally, the VMM 450 may be configured to perform one or more steps of the method 100 of **FIG. 1****.**

**FIG. 5** schematically illustrates a simplified vehicle motion management (VMM) 550 according to some examples. For example, the VMM 550 may illustrate a possible implementation of the VMM function 450 of **FIG. 4****.** Alternatively or additionally, the VMM 550 may be comprised in the vehicle control unit 290 of **FIG. 2****.** Yet alternatively or additionally, the VMM 550 may comprise the primary control allocator 310 and the supplementary control allocator 320 of **FIG. 3****.** Yet alternatively or additionally, the VMM 550 may be configured to perform one or more steps of the method 100 of **FIG. 1****.**

The VMM 550 comprises motion estimation (ME) 551, global force generation (GFG) 552, and motion coordination (MC) 553; wherein at least the global force generation 552, and the motion coordination 553 may be duplicated to implement both a primary control allocator and a supplementary control allocator.

The motion estimation 551 is configured to provide measured/estimated parameters 501 representing the current motion of the vehicle to the global force generation 552.

For implementation of the primary control allocator, the global force generation 552 is configured to determine global forces based on the parameters 501 and based on actual motion requests 511 (compare with 314 of **FIG. 3****).** For implementation of the supplementary control allocator, the global force generation 552 is configured to determine global forces based on the parameters 501 and based on predicted motion requests 512 (compare with 324 of **FIG. 3****).** The global force generation 552 is also configured to provide the determined global forces 505, 505' to the motion coordination 553.

For implementation of the primary control allocator, the motion coordination 553 is configured to determine actual actuator instructions 514 based on the determined global forces 505 and the current MDS status 513 (compare with 315 of **FIG. 3****),** and to provide the actual actuator instructions 514 for operation of the plurality of motion support devices (compare with 316 of **FIG. 3****).** For implementation of the supplementary control allocator, the motion coordination 553 is configured to determine predicted actuator instructions 515 based on the determined global forces 505' and the extended MDS information 513' (e.g., current MDS status and predictive information regarding the MDSs), and to provide the predicted actuator instructions 515 for application to a vehicle motion model (compare with 326 of **FIG. 3****).**

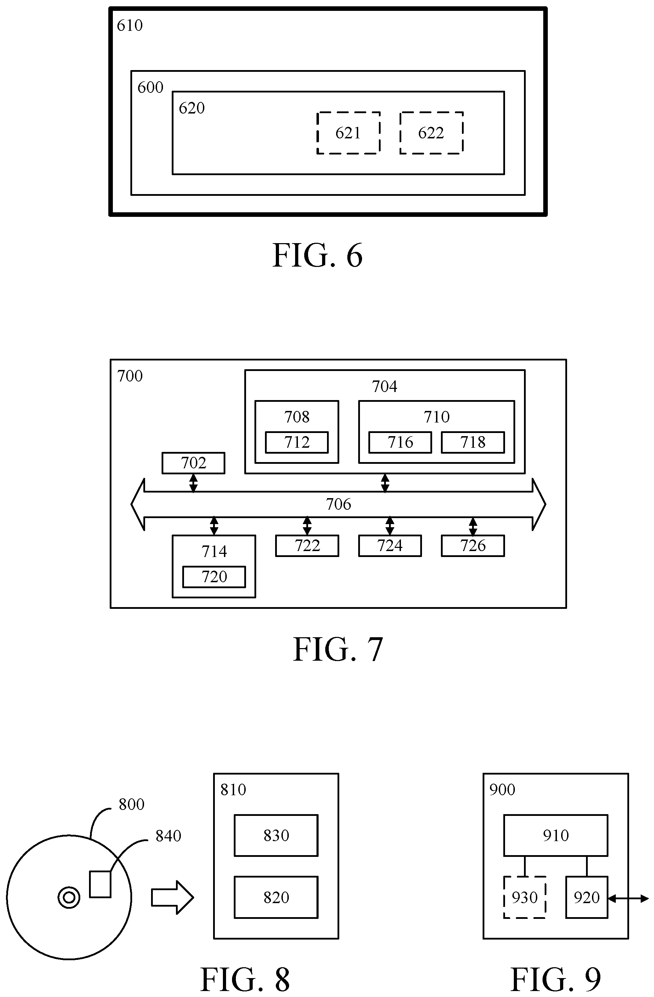

**FIG. 6** schematically illustrates a vehicle control system 610 according to some examples. For example, the vehicle control system 610 may be comprised in the vehicle 200 of **FIG. 2****.** Alternatively or additionally, the vehicle control system 610 may be configured to cause execution of (e.g., configured to perform) one or more steps as described in connection with the method 100 of **FIG. 1****.**

The vehicle control system 610 comprises an apparatus 600 for controlling a vehicle, wherein the vehicle comprises a plurality of motion support devices for actuating the vehicle and a primary control allocator for transforming motion requests to actuator instructions, and wherein the vehicle is configured to adhere to the motion requests by operating the plurality of motion support devices in response to the instructions from the primary control allocator.

The apparatus 600 comprises a controller (CNTR; e.g., controlling circuitry or a control module) 620. For example, the controller 620 may be comprised in (or correspond to) the vehicle control unit 290 of **FIG. 2****,** and/or the VMM function 450 of **FIG. 4****.**

The controller 620 is configured to cause a prospect actuator scenario to be analyzed (compare with step 130 of **FIG. 1****)** by causing a supplementary control allocator to transform a predicted motion request to predicted actuator instructions (compare with sub-step 132 of **FIG. 1****),** and determination of whether operating the plurality of motion support devices in response to the predicted actuator instructions and under the prospect actuator scenario fulfils a safety constraint (compare with sub-step 134 of **FIG. 1****).**

To this end, the controller 520 may comprise, or be otherwise associated with (e.g., connected, or connectable, to) an analyzer (e.g., analyzing circuitry or an analysis module) 621; configured to analyze the prospect actuator scenario. For example, the analyzer 621 may comprise the supplementary control allocator, a vehicle motion model, and a safety constraint comparator (compare with blocks 320, 327, and 328 of **FIG. 3****).**

The controller 620 is also configured to cause a mitigation action to be performed responsive to determination of non-fulfillment of the safety constraint (compare with step 150 of **FIG. 1****).**

To this end, the controller 620 may comprise, or be otherwise associated with (e.g., connected, or connectable, to) a mitigator (e.g., mitigating circuitry or a mitigation module) 622; configured to cause the mitigation action to be performed (e.g., performing the mitigation action or controlling another device to perform the mitigation action).

It should be noted that the controller 620 may be further configured to cause performance of one or more of the other steps described in connection with **FIG. 1****.** To this end - even if not shown in **FIG. 5** - the controller 620 may comprise, or be otherwise associated with (e.g., connected, or connectable, to) further circuitry or modules configured to performed such steps.

**FIG. 7** is a schematic diagram of a computer system 700 for implementing examples disclosed herein. The computer system 700 may be comprised - or comprisable - in a vehicle according to some examples.

For example, the computer system 700 may be configured to execute, or cause execution of, one or more of the method steps as described in connection with **FIG. 1****.**

Alternatively or additionally, the computer system 700 (e.g., by the processor device 702) may be configured to perform and/or utilize the analysis and mitigation actions as described herein for a vehicle control.

The computer system 700 is adapted to execute instructions from a computer-readable medium to perform these and/or any of the functions or processing described herein. The computer system 700 may be connected (e.g., networked) to other machines in a LAN, an intranet, an extranet, or the Internet. While only a single device is illustrated, the computer system 700 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 700 may comprise at least one computing device or electronic device capable of including firmware, hardware, and/or executing software instructions to implement the functionality described herein. The computer system 700 may include a processor device 702 (may also be referred to as a control unit), a memory 704, and a system bus 706. The computer system 700 may include at least one computing device having the processor device 702. The system bus 706 provides an interface for system components including, but not limited to, the memory 704 and the processor device 702. The processor device 702 may include any number of hardware components for conducting data or signal processing or for executing computer code stored in memory 704. The processor device 702 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 706 may be any of several types of bus structures that may further interconnect to a memory bus (with or without a memory controller), a peripheral bus, and/or a local bus using any of a variety of bus architectures. The memory 704 may be one or more devices for storing data and/or computer code for completing or facilitating methods described herein. The memory 704 may include database components, object code components, script components, or other types of information structure for supporting the various activities herein. Any distributed or local memory device may be utilized with the systems and methods of this description. The memory 704 may be communicably connected to the processor device 702 (e.g., via a circuit or any other wired, wireless, or network connection) and may include computer code for executing one or more processes described herein. The memory 704 may include non-volatile memory 708 (e.g., read-only memory (ROM), erasable programmable read-only memory (EPROM), electrically erasable programmable read-only memory (EEPROM), etc.), and volatile memory 710 (e.g., random-access memory (RAM)), or any other medium which can be used to carry or store desired program code in the form of machine-executable instructions or data structures and which can be accessed by a computer or other machine with a processor device 702. A basic input/output system (BIOS) 712 may be stored in the non-volatile memory 708 and can include the basic routines that help to transfer information between elements within the computer system 700.

The computer system 700 may further include or be coupled to a non-transitory computer-readable storage medium such as the storage device 714, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 714 and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device 714 and/or in the volatile memory 710, which may include an operating system 716 and/or one or more program modules 718. All or a portion of the examples disclosed herein may be implemented as a computer program product 720 stored on a transitory or non-transitory computer-usable or computer-readable storage medium (e.g., single medium or multiple media), such as the storage device 714, which includes complex programming instructions (e.g., complex computer-readable program code) to cause the processor device 702 to carry out the steps described herein. Thus, the computer-readable program code can comprise software instructions for implementing the functionality of the examples described herein when executed by the processor device 702. The processor device 702 may serve as a controller or control system for the computer system 700 that is to implement the functionality described herein.

The computer system 700 also may include an input device interface 722 (e.g., input device interface and/or output device interface). The input device interface 722 may be configured to receive input and selections to be communicated to the computer system 700 when executing instructions, such as from a keyboard, mouse, touch-sensitive surface, etc. Such input devices may be connected to the processor device 702 through the input device interface 722 coupled to the system bus 706 but can be connected through other interfaces such as a parallel port, an Institute of Electrical and Electronic Engineers (IEEE) 1394 serial port, a Universal Serial Bus (USB) port, an IR interface, and the like. The computer system 700 may include an output device interface 724 configured to forward output, such as to a display, a video display unit (e.g., a liquid crystal display (LCD) or a cathode ray tube (CRT)). The computer system 700 may also include a communications interface 726 suitable for communicating with a network as appropriate or desired.

The operational steps described in any of the exemplary aspects herein are described to provide examples and discussion. The steps may be performed by hardware components, may be implemented in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The described examples and their equivalents may be realized in software or hardware or a combination thereof. The examples may be performed by general purpose circuitry. Examples of general purpose circuitry include digital signal processors (DSP), central processing units (CPU), co-processor units, field programmable gate arrays (FPGA) and other programmable hardware. Alternatively or additionally, the examples may be performed by specialized circuitry, such as application specific integrated circuits (ASIC). The general purpose circuitry and/or the specialized circuitry may, for example, be associated with or comprised in an electronic apparatus such as a vehicle control unit.

The electronic apparatus may comprise arrangements, circuitry, and/or logic according to any of the examples described herein. Alternatively or additionally, the electronic apparatus may be configured to perform method steps according to any of the examples described herein.

According to some examples, a computer program product comprises a non-transitory computer readable medium such as, for example, a universal serial bus (USB) memory, a plug-in card, an embedded drive, or a read only memory (ROM). FIG. 8 illustrates an example computer readable medium in the form of a compact disc (CD) ROM 800. The computer readable medium has stored thereon a computer program 840 comprising program instructions. The computer program is loadable into a data processor (e.g., a data processing unit) 820, which may, for example, be comprised in a vehicle control unit 810. When loaded into the data processor, the computer program may be stored in a memory 830 associated with, or comprised in, the data processor. According to some examples, the computer program may, when loaded into, and run by, the data processor, cause execution of method steps according to, for example, any of the methods described herein.

**FIG. 9** schematically illustrates, in terms of a number of functional units, the components of a control unit 900 according to some examples. The control unit may be comprised in a vehicle, e.g., in the form of a vehicle motion management (VMM) unit. A processor device in the form of processing circuitry 910 is provided using any combination of one or more of a suitable central processing unit (CPU), multiprocessor, microcontroller, digital signal processor (DSP), or similar; capable of executing software instructions stored in a computer program product, e.g. in the form of a storage medium 930. The processing circuitry 910 may further be provided as at least one application specific integrated circuit ASIC, or field programmable gate array FPGA.

Particularly, the processing circuitry 910 is configured to cause the control unit 900 to perform a set of operations, or steps; for example, any one or more of the methods discussed in connection to **FIG. 1****.**

For example, the storage medium 930 may store a set of operations, and the processing circuitry 910 may be configured to retrieve the set of operations from the storage medium 930 to cause the control unit 900 to perform the set of operations. The set of operations may be provided as a set of executable instructions. Thus, the processing circuitry 910 is thereby arranged to execute methods as herein disclosed.

The storage medium 930 may comprise persistent storage, which, for example, can be any single one or combination of magnetic memory, optical memory, solid state memory or even remotely mounted memory.

The control unit 900 may further comprise an interface 920 for communication with at least one external device. As such, the interface 920 may comprise one or more transmitters and receivers, comprising analogue and digital components and a suitable number of ports for wireline or wireless communication.

The processing circuitry 910 controls the general operation of the control unit 900, e.g., by sending data and control signals to the interface 920 and the storage medium 930, by receiving data and reports from the interface 920, and by retrieving data and instructions from the storage medium 930. Other components, as well as the related functionality, of the control node are omitted in order not to obscure the concepts presented herein.

In some examples, the control unit 900 may be seen as a control system, or may be comprised in a control system. Such a control system may, for example, comprise the apparatus 600 as described in connection with **FIG. 6** (e.g., the processing circuitry 910 may comprise the controller 620 of **FIG. 6****).**

The control system may be configured for vehicle motion management (VMM). In some examples, the control system is configured to perform and/or utilize the analysis and mitigation actions as described herein for a vehicle control.

For example, the VCU 290 of **FIG. 2** may comprise one or more of the apparatus 600 of **FIG. 6****,** the control system 610 of **FIG. 6****,** the computer system 700 of **FIG. 7****,** the vehicle control unit 810 of **FIG. 8****,** and the control unit 900 of **FIG. 9****.**

It should be noted that a feature or advantage mentioned herein in relation to one of the figures may be equally applicable, as suitable, to any other one of the figures; even if not mentioned explicitly in relation thereto.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element.

Relative terms such as "below" or "above" or "upper" or "lower" or "horizontal" or "vertical" may be used herein to describe a relationship of one element to another element as illustrated in the figures. It will be understood that these terms and those discussed above are intended to encompass different orientations of the device in addition to the orientation depicted in the figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

It is to be understood that the present invention is not limited to the aspects described above and illustrated in the drawings; rather, the scope of the present invention is set forth in the following claims.

## Claims

1. A computer system comprising a processor device (290, 620, 820, 910) configured to control a vehicle (200), wherein the vehicle comprises a plurality of motion support devices (317, 421, 422) for actuating the vehicle and a primary control allocator (310) for transforming motion requests to actuator instructions, and wherein the vehicle is configured to adhere to the motion requests by operating the plurality of motion support devices in response to the instructions from the primary control allocator, the processor device being further configured to:
analyze a prospect actuator scenario, wherein the prospect actuator scenario is based on a virtual vehicle condition and comprises one or more of the motion support devices being disabled or impaired, by:
- letting a supplementary control allocator (320) transform a predicted motion request to predicted actuator instructions; and
- determining whether operating the plurality of motion support devices in response to the predicted actuator instructions and under the prospect actuator scenario fulfils a safety constraint; and
perform a mitigation action responsive to determination of non-fulfillment of the safety constraint.

2. A computer-implemented method (100) for controlling a vehicle (200), wherein the vehicle comprises a plurality of motion support devices (317, 421, 422) for actuating the vehicle and a primary control allocator (310) for transforming motion requests to actuator instructions, and wherein the vehicle is configured to adhere to the motion requests by operating the plurality of motion support devices in response to the instructions from the primary control allocator, the method comprising:
analyzing (130), by a processor device (290, 620, 820, 910) of a computer system, a prospect actuator scenario, wherein the prospect actuator scenario is based on a virtual vehicle condition and comprises one or more of the motion support devices being disabled or impaired, by:
- letting (132), by the processor device, a supplementary control allocator (320) transform a predicted motion request to predicted actuator instructions; and
- determining (134), by the processor device, whether operating the plurality of motion support devices in response to the predicted actuator instructions and under the prospect actuator scenario fulfils a safety constraint; and
performing (150), by the processor device, a mitigation action responsive to determination of non-fulfillment of the safety constraint.

3. The method of claim 2, wherein the prospect actuator scenario is selected based on a likelihood of occurrence.

4. The method of any of claims 2 through 3, wherein the prospect actuator scenario is selected based on one or more of: component age associated with one or more of the motion support devices, current temperature of one or more of the motion support devices, range of manufacture variations for one or more of the motion support devices, and statistical probability of failure for one or more of the motion support devices.

5. The method of any of claims 2 through 4, wherein the supplementary control allocator (320) is functionally identical to the primary control allocator (310).

6. The method of any of claims 2 through 5, wherein the predicted motion request is based on information of an upcoming situation and/or a predefined safety scenario.

7. The method of claim 6, wherein the information of the upcoming situation is acquired from one or more of: an environment capturing sensor (230) of the vehicle, and a route information system.

8. The method of any of claims 2 through 7, wherein determining (134) whether operating the plurality of motion support devices in response to the predicted actuator instructions and under the prospect actuator scenario fulfils a safety constraint comprises:
applying (136), by the processor device, the predicted actuator instructions to a vehicle motion model (327) to obtain a predicted vehicle motion behavior, wherein the vehicle motion model is set in accordance with the prospect actuator scenario; and
comparing (138), by the processor device, the predicted vehicle motion behavior to the safety constraints.

9. The method of any of claims 2 through 8, wherein performing (150) the mitigation action comprises one or more of: issuing a warning through a user interface of the vehicle, limiting a speed of the vehicle, issuing actuator instructions corresponding to an evasive maneuver of the vehicle, overriding or modifying actuator instructions of the primary control allocator, and switching to a redundant motion support device for one or more of the plurality of motion support devices.

10. A computer program product (800) comprising program code (840) for performing, when executed by a processor device (290, 620, 820, 910), the method of any of claims 2 through 9.

11. A non-transitory computer-readable storage medium (800) comprising instructions (840), which when executed by a processor device (290, 620, 820, 910), cause the processor device to perform the method of any of claims 2 through 9.

12. A vehicle (200) comprising the computer system of claim 1.

## Patentansprüche

1. Ein Computersystem, umfassend eine Prozessoreinheit (290, 620, 820, 910), die konfiguriert ist, ein Fahrzeug (200) zu steuern, wobei das Fahrzeug eine Vielzahl von Bewegungssupportvorrichtungen (317, 421, 422) zum Betätigen des Fahrzeugs und einen primären Steuerungsallokator (310) zum Umwandeln von Bewegungswünschen in Aktuatoranweisungen umfasst, und wobei das Fahrzeug so konfiguriert ist, um den Bewegungswünschen zu entsprechen, indem die Vielzahl von Bewegungssupportvorrichtungen in Antwort auf die Anweisungen des primären Steuerungsallokators betätigt werden, wobei das Prozessorengerät weiter dazu konfiguriert:
einen potenziellen Aktuator-Szenario zu analysieren, wobei das potenzielle Aktuator-Szenario auf eine virtuelle Fahrzeugkonfiguration, und umfasst eine oder mehrere der Bewegungshilfevorrichtungen, die deaktiviert oder beeinträchtigt sind, durch:
- dadurch, dass ein zusätzlicher Steuerungsverteiler (320) eine vorhergesagte Bewegung eine vorhergesagte Anforderung in vorhergesagte Anweisungen für Aktoren umwandelt; und
- Feststellen, ob der Betrieb der Vielzahl von Bewegungssupportvorrichtungen als Reaktion auf die vorhergesagten Aktoranweisungen und unter dem erwarteten Aktorszenario eine Sicherheitsbeschränkung erfüllt; und
Durchführen einer Minderungsmaßnahme als Reaktion auf die Feststellung, dass die Sicherheitsbeschränkung nicht erfüllt wird.

2. Ein computerimplementiertes Verfahren (100) zur Steuerung eines Fahrzeugs (200), wobei das Fahrzeug eine Vielzahl von Bewegungssupportvorrichtungen (317, 421, 422) zum Betätigen des Fahrzeugs und einen primären Steuerungsverteiler (310) zum Umwandeln von Bewegungswünschen in Aktoranweisungen umfasst. und wobei das Fahrzeug so konfiguriert ist, dass es die Bewegungswünsche durch Betätigung der mehreren Bewegungssupportvorrichtungen in Reaktion auf die Anweisungen des primären Steuerungsverteilers ausführt, wobei das Verfahren umfasst:
Analysieren (130), durch eine Prozessoreinheit (290, 620, 820, 910) eines Computersystems, einer einer potenziellen Aktuator-Szenario, wobei das potenzielle Aktuator-Szenario auf einem virtuellen Fahrzeugzustand basiert und eine oder mehrere der Bewegungsunterstützungsvorrichtungen umfasst, die deaktiviert oder beeinträchtigt sind, durch:
- ermöglicht (132), durch die Prozessoreinheit, dass ein zusätzlicher Steuerungsallokator (320) eine vorhergesehte Bewegungsanforderung in vorhergesehte Aktuatoranweisungen umwandelt; und
- feststellt (134), durch die Prozessoreinheit, ob der Betrieb der Vielzahl von Bewegungsunterstützungsvorrichtungen als Reaktion auf die vorhergesehten Aktuatoranweisungen und unter dem vorhergesehenen Aktuatorszenario eine Sicherheitsbeschränkung erfüllt; und
durchführt (150), durch die Prozessoreinheit, eine Abhilfemaßnahme als Reaktion auf die Feststellung der Nicht-Erfüllung der Sicherheitsbeschränkung.

3. Verfahren nach Anspruch 2, wobei das vorhergesehene Aktuatorszenario basierend auf einer Wahrscheinlichkeit ausgewählt wird.

4. Verfahren nach einem der Ansprüche 2 bis 3, wobei das vorhergesehene Aktuatorszenario basierend auf einem oder mehreren der folgenden Faktoren ausgewählt wird: Alter der Komponente im Zusammenhang mit einem oder mehreren der Bewegung Unterstützungsvorrichtungen, aktuelle Temperatur eines oder mehrerer der Bewegungsvorrichtungen, Bereich der Herstellungsabweichungen für eine oder mehrere der Bewegungsvorrichtungen und statistische Wahrscheinlichkeit eines Ausfalls für eine oder mehrere der Bewegungsvorrichtungen.

5. Das Verfahren nach einem der Ansprüche 2 bis 4, wobei der sekundäre Steuerungsallokator (320) funktional identisch mit dem primären Steuerungsallokator (310) ist.

6. Das Verfahren nach einem der Ansprüche 2 bis 5, wobei die vorhergesagte Bewegunganforderung auf Informationen über eine bevorstehende Situation und/oder ein vordefiniertes Sicherheitszenario basiert.

7. Das Verfahren nach Anspruch 6, wobei die Informationen über die bevorstehende Situation von einer oder mehreren Quellen erfasst werden, darunter: ein Umgebungsaufnahmesensor (230) des Fahrzeugs und ein Routeninformationssystem.

8. Das Verfahren nach einem der Ansprüche 2 bis 7, wobei bestimmt wird (134), ob der eine Vielzahl von Bewegungssupportvorrichtungen als Reaktion auf die vorhergesagten Anweisungen für Aktoren, und festzustellen, ob das mit dem potenziellen Aktorszenario verbundene Verhalten eine Sicherheitsbeschränkung erfüllt, umfasst:
Anwenden (136), durch die Prozessoreinrichtung, der vorhergesagten Anweisungen für Aktoren auf ein Fahrzeugbewegungsmodell (327), um ein vorhergesagtes Fahrzeugbewegungsverhalten zu erhalten,
wobei das Fahrzeugbewegungsmodell in Übereinstimmung mit dem potenziellen Aktorszenario eingestellt ist; und
Vergleichen (138), durch die Prozessoreinrichtung, das vorhergesagte Fahrzeugbewegungsverhalten mit den Sicherheitsbeschränkungen.

9. Das Verfahren gemäß einem der Ansprüche 2 bis 8, wobei die Ausführung (150) der Abmilderungsmaßnahme eines oder mehrerer der folgenden Schritte umfasst: Ausgeben einer Warnung über eine Benutzerschnittstelle des Fahrzeugs, Begrenzen einer Geschwindigkeit des Fahrzeugs, Ausgeben von Aktoranweisungen, die einer Ausweichmanöver des Fahrzeugs entsprechen, Überschreiben oder Modifizieren von Aktoranweisungen des primären Steuerungsallokators und Umschalten auf ein redundantes Bewegungssupportsystem für eines oder mehrere der mehreren Bewegungssupportsysteme.

10. Ein Computerprogrammprodukt (800) mit Programmcode (840) zur Durchführung, wenn es von einer Prozessoreinrichtung (290, 620, 820, 910) ausgeführt wird, des Verfahrens gemäß einem der Ansprüche 2 bis 9.

11. Ein nicht-flüchtiges, computerlesbares Speichermedium (800) mit Anweisungen (840), die, wenn sie von einer Prozessoreinrichtung (290, 620, 820, 910) ausgeführt werden, die Prozessoreinrichtung veranlassen, das Verfahren gemäß einem der Ansprüche 2 bis 9.

12. Fahrzeug (200), das das Computersystem nach Anspruch 1 umfasst.

## Revendications

1. Un système informatique comprenant un dispositif processeur (290, 620, 820, 910) configuré pour commander un véhicule (200), dans lequel le véhicule comprend une pluralité de dispositifs d'assistance au mouvement (317, 421, 422) pour actionner le véhicule et un allocateur de commande principal (310) pour transformer des demandes de mouvement en instructions d'actionneur, et dans lequel le véhicule est configuré pour adhérer aux demandes de mouvement en faisant fonctionner la pluralité de dispositifs d'assistance au mouvement en réponse aux instructions provenant de l'allocateur de commande principal, le dispositif processeur étant en outre configuré pour :
analyser un scénario d'actionneur prospectif, dans lequel le scénario d'actionneur prospectif est basé sur un état de véhicule virtuel et comprend un ou plusieurs des dispositifs d'assistance au mouvement étant désactivés ou dégradés, en :
- laissant un allocateur de commande supplémentaire (320) transformer une demande de mouvement prédite en instructions d'actionneur prédites ; et
- déterminant si le fonctionnement de la pluralité de dispositifs d'assistance au mouvement en réponse aux instructions d'actionneur prédites et selon le scénario d'actionneur prospectif satisfait une contrainte de sécurité ; et
exécuter une action d'atténuation en réponse à une détermination de non-satisfaction de la contrainte de sécurité.

2. Un procédé mis en œuvre par ordinateur (100) pour commander un véhicule (200), dans lequel le véhicule comprend une pluralité de dispositifs d'assistance au mouvement (317, 421, 422) pour actionner le véhicule et un allocateur de commande principal (310) pour transformer des demandes de mouvement en instructions d'actionneur, et dans lequel le véhicule est configuré pour adhérer aux demandes de mouvement en faisant fonctionner la pluralité de dispositifs d'assistance au mouvement en réponse aux instructions provenant de la commande principale allocateur, le procédé comprenant :
l'analyse (130), par un dispositif processeur (290, 620, 820, 910) d'un système informatique, d'un scénario d'actionneur prospectif, dans lequel le scénario d'actionneur prospectif est basé sur un état de véhicule virtuel et comprend un ou plusieurs des dispositifs d'assistance au mouvement étant désactivés ou dégradés, en :
- laissant (132), par le dispositif processeur, un allocateur de commande supplémentaire (320) transformer une demande de mouvement prédite en instructions d'actionneur prédites ; et
- déterminant (134), par le dispositif processeur, si le fait de faire fonctionner la pluralité de dispositifs d'assistance au mouvement en réponse aux instructions d'actionneur prédites et selon le scénario d'actionneur prospectif satisfait une contrainte de sécurité ; et
exécutant (150), par le dispositif processeur, une action d'atténuation en réponse à la détermination de non-satisfaction de la contrainte de sécurité.

3. Le procédé de la revendication 2, dans lequel le scénario d'actionneur prospectif est sélectionné sur la base d'une probabilité d'occurrence.

4. Le procédé de l'une quelconque des revendications 2 à 3, dans lequel le scénario d'actionneur prospectif est sélectionné sur la base d'un ou plusieurs parmi : un âge de composant associé à un ou plusieurs des dispositifs d'assistance au mouvement dispositifs d'assistance, une température actuelle d'un ou plusieurs des dispositifs d'assistance au mouvement, une plage de variations de fabrication pour un ou plusieurs des dispositifs d'assistance au mouvement, et une probabilité statistique de défaillance pour un ou plusieurs des dispositifs d'assistance au mouvement.

5. Le procédé de l'une quelconque des revendications 2 à 4, dans lequel l'allocateur de commande supplémentaire (320) est fonctionnellement identique à l'allocateur de commande principal (310).

6. Le procédé de l'une quelconque des revendications 2 à 5, dans lequel la demande de mouvement prédite est basée sur des informations d'une situation à venir et/ou un scénario de sécurité prédéfini.

7. Le procédé de la revendication 6, dans lequel les informations de la situation à venir sont acquises depuis un ou plusieurs parmi : un capteur de capture d'environnement (230) du véhicule, et des informations d'itinéraire système.

8. Le procédé de l'une quelconque des revendications 2 à 7, dans lequel la détermination (134) de si le fait de faire fonctionner la pluralité de dispositifs d'assistance au mouvement en réponse aux instructions d'actionneur prédites et selon le scénario d'actionneur prospectif satisfait une contrainte de sécurité comprend :
appliquant (136), par le dispositif processeur, les instructions d'actionneur prédites à un
modèle de mouvement de véhicule (327) pour obtenir un comportement de mouvement de véhicule prédit,
dans lequel le modèle de mouvement de véhicule est réglé conformément au scénario d'actionneur prospectif scénario ; et
comparer (138), par le dispositif processeur, le comportement de mouvement du véhicule prédit aux contraintes de sécurité.

9. Le procédé de l'une quelconque des revendications 2 à 8, dans lequel l'exécution (150) de l'action d'atténuation comprend un ou plusieurs parmi : émettre un avertissement par l'intermédiaire d'une interface utilisateur du véhicule, limiter une vitesse du véhicule, émettre des instructions d'actionneur correspondant à une manœuvre d'évitement du véhicule, prendre le pas sur ou modifier des instructions d'actionneur de l'allocateur de commande principal, et passer à un dispositif d'assistance au mouvement redondant pour un ou plusieurs de la pluralité de dispositifs d'assistance au mouvement.

10. Un produit programme informatique (800) comprenant un code de programme (840) pour exécuter, lorsqu'il est exécuté par un dispositif processeur (290, 620, 820, 910), le procédé de l'une quelconque des revendications 2 à 9.

11. Un support de stockage non transitoire lisible par ordinateur (800) comprenant des instructions (840), qui, lorsqu'elles sont exécutées par un dispositif processeur (290, 620, 820, 910), amènent le dispositif processeur à exécuter le procédé de l'une quelconque des revendications 2 à 9.

12. Un véhicule (200) comprenant le système informatique de la revendication 1.
